Europäisches Patentamt

European Patent Office

Office européen des brevets

(19)

(11) Publication number: **0 007 794**

**B1**

# EUROPEAN PATENT SPECIFICATION

(12)

(45) Date of publication of patent specification: **29.07.81**

(51) Int. Cl.³: **G 01 N 27/30**

(21) Application number: **79301468.9**

(22) Date of filing: **24.07.79**

(54) Device for use in determining ionic activity.

(30) Priority: **24.07.78 US 927085**

(43) Date of publication of application:
**06.02.80 Bulletin 80/3**

(45) Publication of the grant of the European patent:
**29.07.81 Bulletin 81/30**

(84) Designated Contracting States:
**BE CH DE FR GB IT SE**

(56) References cited:
**DE - A1 - 2 808 164**
**US - A - 3 575 834**
**US - A - 3 855 100**
**US - A - 4 053 381**

(73) Proprietor: **EASTMAN KODAK COMPANY**
**343 State Street**
**Rochester, New York 14650 (US)**

(72) Inventor: **Paul, John Oliver**
**502 Sycamore**
**East Rochester, New York (US)**
Inventor: **Babaoglu, Kerinchan**
**924 Plank Road**
**Penfield, New York (US)**

(74) Representative: **Trangmar, Leigh Alan et al,**
**P.O. Box 114 246 High Holborn**
**London WC1V 7EA (GB)**

Courier Press, Leamington Spa, England.

# 0 007 794

## Device for use in determining ionic activity

The present invention relates to devices for use in determining the activity of ions in a sample of liquid solution, and is particularly useful in potentiometrically measuring ion activity in biological fluids.

A test device for determining ion activity in liquids which is both disposable and useable with drop-sized test samples is disclosed in U.S. Patent No. 4,053,381. Two solid electrodes, preferably ion-selective electrodes, are mounted on a frame and a capillary bridge is provided for promoting ionic migration between the electrodes upon application of one or more liquid drops to each electrode. The capillary bridge comprises a porous layer which may be coated on a support with ionic access to both electrodes. When a drop of liquid is applied to each electrode, through a hole in the bridge at each electrode, the drops spread into the capillary bridge until contact is made at a thin junction interface, permitting ionic migration between the drops. Preferably a reference solution of known ion activity is applied to one (reference) electrode and the test sample solution is applied to the other electrode. The electrical potentials at the interfaces between the drops of liquid and the electrodes are measured and compared to provide an indication of ion activity in the test sample solution.

Although the devices disclosed in U.S. Patent No. 4,053,381 provide excellent results in use for determining ion activity in liquids, some problems arise with respect to the degree of care which must be exercised during operation. If too much liquid is absorbed in the capillary bridge insufficient liquid is left at the electrodes for satisfactory ion migration, while too little absorption might result in spill over onto the electrodes resulting in erroneous readings.

An adverse situation arises if the liquid placed in the region of the electrodes spreads, not only within the capillary bridge, but also across the top surface of the bridge. This, on occasion, may result in the formation of an apparent junction on top of the bridge, causing liquid mixing and variable readings. Such a situation will be referred to herein as "external bridging" of the capillary bridge.

Another possible cause for imprecision is evaporation of liquid from the drops. Even though evaporation of the test and reference solutions would normally occur at the same rate, changes in electrical potential due to changes in concentration would not necessarily cancel because of the presence of different interferents in the test and the reference solutions. The effect of such interferents may be amplified by evaporation.

It is an object of the present invention to overcome the aforementioned problems in a device for use in determining activity of ions in a liquid solution, the device including a frame, two solid electrodes mounted on the frame, and a porous member extending between the electrodes for promoting migration of ions between the electrodes after application of drops of liquid.solution at the electrodes.

According to the present invention such a device is characterized by a nonporous layer on the surface of the porous member away from the electrodes.

Preferably the nonporous layer has holes for receiving liquid solution, each hole being so disposed as to overlie a respective one of the electrodes. In this case the porous member preferably has holes aligned with the holes in the nonporous layer.

Advantages are achieved if the nonporous layer is hydrophobic. Such advantages include greater latitude in the accuracy of placement of drops of liquid solution in the device. The greater latitude in accuracy of drop placement is important in relaxed manufacturing tolerances in automatic processing apparatus wherein drops are applied automatically. The hydrophobic nature of the nonporous layer also aids in inhibiting the solution from spreading across the bridge surface to cause external bridging.

By the present invention, we have provided improvements wherein absorption of the solution drops by the capillary bridge is controlled, external bridging is eliminated and evaporation losses are reduced.


## BRIEF DESCRIPTION OF THE DRAWINGS

In the detailed description of the preferred embodiment of the invention presented below, reference is made to the accompanying drawings in which:

Fig. 1 is a perspective view of apparatus constructed in accordance with the invention; and

Fig. 2 is a sectional view taken generally along the line designated as 2—2 in Fig. 1, showing in detail a preferred form of the capillary bridge.


## DESCRIPTION OF THE PREFERRED EMBODIMENT

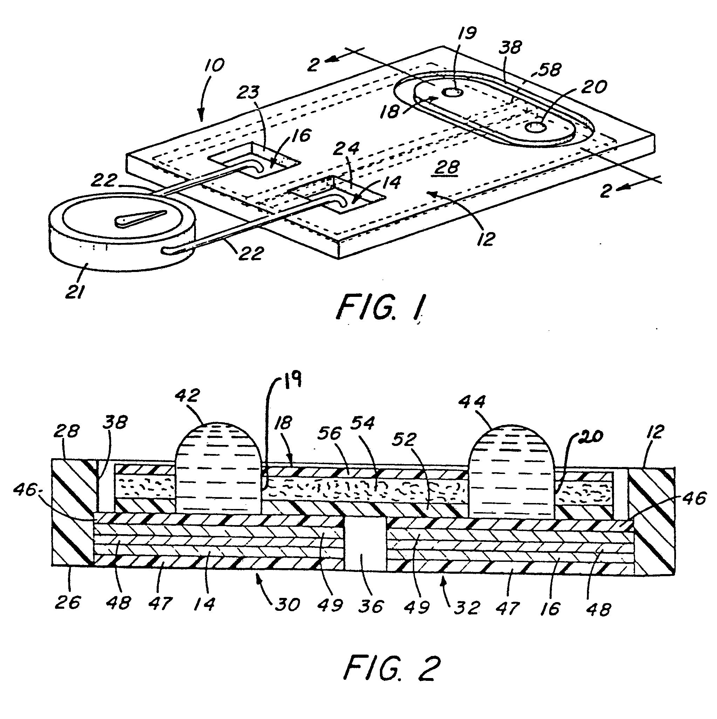

Referred to Fig. 1, there is illustrated a device 10 which comprises a mounting frame 12, two solid electrode substrates 14 and 16 (shown partially in phantom) which form part of a pair of electrodes 30 and 32 mounted (see Figure 2) in the frame 12 and electrically isolated from each other, and a capillary bridge 18 for promoting ionic migration between liquid drops deposited through holes 19 and 20 which extend through the bridge 18 to the electrodes 30 and 32. An electrometer 21 is connected by wires 22 to the electrode substrates 14 and 16 through apertures 23 and 24 in the frame 12 to permit comparison of potentials.

2

## The Mounting Frame

The frame 12 comprises a generally planar body having bottom and top surfaces 26 and 28, respectively. As used herein, the words "bottom" and "top" refer to the preferred orientation of the device during normal use. The bottom of the frame 12 is hollowed out at 36 (see Figure 2) to receive the electrodes 30 and 32. The electrodes are positioned in the hollowed out region so as to be out of electrical contact with each other. Any convenient means may be used to hold the electrodes in the frame 12, such as by adhesive bonding. A transport passageway 38 is formed in the frame 12 in direct communication with the hollowed out region 36.

## The Electrodes

For the potentiometric measurements disclosed herein, the electrodes 30 and 32 preferably include an ion-selective electrode and an external reference electrode, for a direct mode of determining potentials, or two ion-selective electrodes for a differential measurement comparing the ion activity of an unknown test solution with that of a similar reference solution of known ion concentration. The electrodes 30 and 32 (see Figure 2) are shown as being identical and, therefore suitable for the differential mode of measurement which is made by the electrometer 21 when a test drop 42 is applied to one electrode and a reference drop 44 having a known concentration of ions is applied to the other electrode. In the drawings, the thickness of the layers of the electrodes has been greatly exaggerated for clarity.

Both electrodes are formed of layers comprising an ion-selective membrane 46 (permeable to the ion of choice) coated over an internal reference element and a support 47, all of which are solid layers preferably in a dried condition. The internal reference element is shown as comprising several layers such as metal layers 14 (electrode 30) and 16 (electrode 32), a layer 48 which is an insoluble salt of the metal of the layers 14 and 16, and a layer 49 which is an electrolyte containing layer. Although the layers are generally referred to as being "coated" one over another, it should be understood that the term is meant to include laminating or otherwise forming the various strata one over another by any technique.

For purposes of describing the present invention, it is believed that a detailed discussion of the structure and operation of the electrodes 30 and 32 is not necessary. However, a full description of various embodiments of such electrodes and the method of use thereof may be found in hereinbefore mentioned U.S. Patent No. 4,053,381.

## The Capillary Bridge

The capillary bridge 18, shown in section in Fig. 2, is a means of promoting ionic migration between the electrodes 30 and 32. The capillary bridge 18 can be formed of a three layer trilaminate of a variety of compositions. As shown, the bridge 18 is preferably a flat, composite strip having holes 19 and 20, see Figure 1, where the drops of liquid solution 42, 44 are applied. The capillary bridge 18 comprises a) a bottom support layer 52 which is nonporous, and is towards the electrodes, b) a middle porous layer 54, and c) a top nonporous and hydrophobic layer 56, which is away from the electrodes.

In order to prevent flow of liquid under the bridge between the bridge and the electrodes, the bridge is sealed to the electrode at least around the peripheres of the holes 19 and 20.

The middle layer 54 in a preferred embodiment is a porous paper into which the drops of liquid 42 and 44 are absorbed to form an ionic junction 58. A suitable paper for correct absorption of human serum is 'Whatman' #2 chroma, 0.178 mm thick, which is manufactured in the United Kingdom by W. and R. Balston, Ltd. When spotted with a liquid solution drop at the holes 19 and 20, the liquid fills the holes, forms large caps on the top layer 56 and, within 10 to 30 seconds, is absorbed into the layer 54. The liquid from each drop spreads into the capillary bridge until contact is made at about the middle of the bridge to form the ionic junction 58. Sufficient liquid is left unabsorbed to fill the holes 19 and 20.

Other examples of materials suitable for the middle, porous layer are disclosed in referenced U.S. Patent No. 4,053,381: among them, some fibrous materials are mentioned.

The bottom layer 52 and the top layer 56 are nonporous barriers to liquid except at the holes 19 and 20. The top and bottom layers are preferably high-density polyethylene coated on the middle layer 54, with an adhesive applied to the bottom layer 52 for attachment to the electrodes 14, 16. One suitable polyethylene is 'Tenite' NP31 (registered trade mark) manufactured by the Eastman Kodak Company of Rochester, New York. Alternatively the top and bottom layers may be commercially available adhesive tape such as double-sided 'Scotch' brand transparent tape No. 665 for the bottom layer 52 and single-sided Highland brand transparent tape No. 5910 for the top layer 56, both manufactured by the 3M Company of St. Paul, Minnesota.

It is important that the liquid solution does not contact the peripheral edges of electrodes 30 and 32, which would cause a short circuit across the electrode layers. Accordingly, the bottom layer 52 is desirably thick enough (approximately 0.1 mm in a preferred embodiment) to prevent fibres from the middle layer 54 bridging across the bottom layer to the electrodes 30 and 32. Such thicknesses is not necessary for the top layer 56, which may be approximately 0.038 mm thick to conserve space. However, if the top layer 56 is a different thickness from that of the bottom layer 52, the whole capillary bridge 18 may tend to curl. Should this present a problem, the curl can be prevented by forming the top

0 007 794

layer 56 of a high density material than the bottom layer 52. Alternatively, the thickness of the top layer may be increased to equal more closely that of the bottom layer.

Operation

Operation of the device is described in hereinbefore identified U.S. Patent No. 4,053,381, but in general proceeds by spotting a drop of the reference solution in the hole 19 and a drop of the test solution in the hole 20. Probes in the form of the wires 22 contact the metal layers 14 and 16 of the electrodes 30 and 32, respectively, and the potential is read on the electrometer 21. The electrometer reading indicated the ion activity in the test solution relative to the reference solution. The device 10 is then removed from contact with the electrometer 21 and disposed of, and a new device with its electrodes is positioned to receive subsequent drops of solution and to contact the electrometer leads.

Advantages of the Top Layer

As set forth hereinbefore, the nonporous and hydrophobic characteristics of the top layer 56 provide controlled absorption of the test liquid, elimination of external bridging, reduction of evaporation, and improved drop placement latitude. Table I summarizes precision test results during experiments on devices made with a bottom layer 52 of double-sided 'Scotch' adhesive tape No. 665 and a middle porous layer 54 of 'Whatman' #2 chroma paper. Some of the devices were provided with a top layer 56 of 'Highland' adhesive tape No. 5910, while other devices had no top layer. A 2.66 mm hole was punched at each electrode on one centimetre centres. Readings of an electrometer, attached as shown in Figure 1, were taken three minutes after drops of test solutions, having different concentrations of potassium ions, had been applied to the holes. This delay allowed sufficient time for the electrochemical reaction to stabilize. A second reading was taken after five minutes.

TABLE I

| Run Sample | Top Layer | Position | Signal (Millivolts) | | | |
| --- | --- | --- | --- | --- | --- | --- |
| | | | Three Minutes | | Five Minutes | |
| | | | Mean | Std. Dev. | Mean | Std. Dev. |
| 1 | yes | centered | 11.3 | ± 0.6 | 11.5 | ± 0.6 |
| 2 | no | centered | 12.4 | ± 2.0 | 12.9 | ± 2.4 |
| 3 | yes | displaced | 11.4 | ± 0.4 | 11.4 | ± 0.4 |
| 4 | no | displaced | 10.0 | ± 1.2 | 9.4 | ± 0.5 |

A comparison of the reading after three and five minutes gives an indication of the stability of the signal. It will be noted that the standard deviation in runs 1 and 3 did not change over the test period, while the standard deviation of runs 2 and 4 changed markedly. Likewise the mean values of runs 1 and 3 were more consistent than those for runs 2 and 3, and were closer to the theoretical value of 11.58 millivolts for the concentrations of the test solutions used. Since runs 1 and 3 were made with capillary bridges with hydrophobic top layers and runs 2 and 3 were made with capillary bridges without such top layers, it appears from the results that the electrical signals generated are more reproducible when the bridge is provided with a hydrophobic top layer.

The column in Table I entitled "position" indicates whether the capillary bridges were mounted in a normal position on the electrodes so as to be spotted in the centres of the holes 19 and 20 (runs 1 and 2) or displaced laterally approximately 0.5 mm (runs 3 and 4). A comparison of runs 1 and 3 indicates that there is no significant differences in response between the normally positioned bridge and the displaced bridge if provided with a hydrophobic top layer. However, without the top layer, significant differences in response were noted between the runs with normally placed bridges and the runs with displaced bridges (runs 2 and 4). These results indicate that there is greater positioning error latitude and drop placement latitude for capillary bridges with hydrophobic top layers than for capillary bridges without hydrophobic top layers. This is of concern because of the tolerances associated with the placement of the bridge on the electrodes during manufacture and the positioning of the test device in the analyzer apparatus. Runs 1 and 2 consisted of 25 samples each and runs 3 and 4 of 8 samples.

4

**0 007 794**

The advantage of providing a hydrophobic top layer in attaining greater drop placement latitude is further illustrated by Table II. The latitude limit assumed in Table II is that distance at which a drop placed on the capillary bridge failed to wet a hole in the bridge. The drops were injected from various heights from 1.27 mm to 1.78 mm above the bridge using stainless steel needles.

TABLE II

| | Drop Placement Latitude |
|---|---|
| With Top Layer | ± 0.5 mm |
| Without Top Layer | none |

Table II illustrates that capillary bridges with hydrophobic top layers exhibited satisfactory drop placement latitude up to 0.5 mm of misalignment whereas bridges without the top layer exhibited negligible placement latitude. Accordingly, the topless bridge would impose more stringent demands on device assembly and analyzer drop placement tolerances.

In the successful operation of a capillary bridge, it is necessary that the bridge absorb a fairly exact amount of liquid. Too much absorption results in insufficient unabsorbed liquid to keep the holes 19 and 20 filled after the bridge is saturated. Not enough absorption leaves an excess of liquid on top of the bridge which may spill over onto the electrodes, shortening over the electrode sides.

By providing a hydrophobic cover layer, controlled absorption is achieved in the capillary bridge because the drops are formed into large caps and gradually absorpted into the porous layer 54. Without the hydrophobic layer, the drops would spread laterally across the top of the bridge in a random and unpredictable manner (possibly at the expense of hole filling).

External bridging, as defined hereinbefore, is also a potential problem in capillary bridges. Without the top hydrophobic layer 56, the drops 42 and 44 not only would be absorbed into the porous layer 54 at the holes 19 and 20, but would also spread across the top surface of the bridge. If a liquid junction forms between the liquid spreading across the top surface, liquid mixing may result. The hydrophobic nature of the top layer 56 inhibits external junction formation because the liquid prefers to wet the porous layer 54 rather than spread across the hydrophobic surface.

As set forth in the "Description of the Prior Art" section of this specification, evaporation of liquid from the bridge during testing should be avoided or at least minimized. As shown in Table III, the provision of top layer 56 reduces evaporation losses from the bridge (after 5 min. lapsed time) by about 3% at 21°C and 17% at 38°C as compared to losses from a bridge without a top layer.

TABLE III

| | Percent Evaporation | | | |
|---|---|---|---|---|
| | 21°C | | 38°C | |
| Lapsed Time | With Top Layer | Without Top Layer | With Top Layer | Without Top Layer |
| 1 min. | 2.2 | 2.4 | — | — |
| 3 min. | 6.0 | 6.5 | 24 | 33 |
| 5 min. | 9.5 | 12.5 | 37 | 54 |

## Claims

1. A device for use in determining the activity of ions in a liquid solution, including a frame (12), two solid electrodes (30, 32) mounted on the frame and a porous member (54) extending between the electrodes for promoting migration of ions between the electrodes after application of drops of liquid solution at the electrodes, characterized by a nonporous layer (56) on the surface of the porous member away from the electrodes.

5

# 0 007 794

2. A device according to claim 1, characterized in that the nonporous layer (56) has two holes (19, 20) for receiving liquid solution, each hole being so disposed as to overlie a respective one of the electrodes (30, 32).

3. A device according to claim 2, characterized in that the porous member (54) has holes aligned with the holes in the nonporous layer (56).

4. A device according to claim 2 or 3, characterized in that the nonporous layer (56) is hydrophobic.

5. A device according to claim 3 or claim 4 when appendant to claim 3, including a second nonporous layer (52) on the surface of the porous member (54) towards the electrode, the second nonporous member having holes aligned with the holes in the porous member, characterized in that the porous member is formed of fibrous material, and that the second nonporous layer has sufficient thickness to prevent fibers of the porous member causing a liquid bridge from the porous member to an electrode (30 or 32).

6. A device according to claim 5, characterized in that the first-mentioned nonporous layer (56) is thinner than the second nonporous layer (52) but is formed of denser material to prevent curling.

7. A device according to claim 4, 5 or 6 characterized in that the first-mentioned non-porous layer (56) is formed of high density polyethylene.

**Patentansprüche**

1. Vorrichtung zum Bestimmen der Ionenaktivität in einer Flüssigkeitslösung, mit einem Rahmen (12), zwei auf dem Rahmen gelagerten Festelektroden (30, 32) und einem porösen Teil (54), das sich zwischen den Elektroden erstreckt und nach dem Aufbringen von Tropfen der Flüssigkeitslösung auf die Elektroden die Wanderung der Ionen zwischen den Elektroden fördert, dadurch gekennzeichnet, daß auf der den Elektroden abgewandten Seite eine nicht poröse Schicht (56) auf der Oberfläche des porösen Teils vorgesehen ist.

2. Vorrichtung nach Anspruch 1, dadurch gekennzeichnet, daß die nicht poröse Schicht (56) zwei Löcher (19, 20) für die Aufnahme von Flüssigkeitslösung besitzt, wobei jedes Loch über einem entsprechenden Loch in den Elektroden (30, 32) liegt.

3. Vorrichtung nach Anspruch 2, dadurch gekennzeichnet, daß das poröse Teil (54) Löcher besitzt, die auf die Löcher in der nicht porösen Schicht (56) ausgerichtet sind.

4. Vorrichtung nach Anspruch 2 oder 3, dadurch gekennzeichnet, daß die nicht poröse Schicht (56) hydrophob ist.

5. Vorrichtung nach Anspruch 3 oder Anspruch 4 in Verbindung mit Anspruch 3, mit einer zweiten nicht porösen Schicht (52), die auf der der Elektrode zugewandten Seite auf der Oberfläche des porösen Teils (54) vorgesehen ist und Löcher aufweist, die auf die Löcher im porösen Teil ausgerichtet sind, dadurch gekennzeichnet, daß das poröse Teil aus einem Fasermaterial besteht, und daß die zweite, nicht poröse Schicht so dick ist, daß sie verhindert, daß Fasern des porösen Teils eine Flüssigkeitsbrücke zwischen dem porösen Teil und einer Elektrode (30 oder 32) bilden.

6. Vorrichtung nach Anspruch 5, dadurch gekennzeichnet, daß die erste nicht poröse Schicht (56) dünner ist als die zweite nicht poröse Schicht (52), jedoch aus einem dichteren Material besteht, um ein Aufrollen der Schicht zu verhindern.

7. Vorrichtung nach Anspruch 4, 5 oder 6, dadurch gekennzeichnet, daß die erste nicht poröse Schicht (56) aus Polyäthylen von hoher Dichte besteht.

**Revendications**

1. Dispositif pour déterminer l'activité ionique d'une solution liquide, comprenant un châssis (12), deux électrodes solides (30, 32) montées dans de châssis, et une couche poreuse (54) couvrant partiellement les deux électrodes pour permettre la migration des ions entre les électrodes après application des gouttes de solution liquide sur les électrodes, caractérisé en ce qu'il comprend une couche non poreuse (56) placée sur la face de la couche poreuse la plus éloignée des électrodes.

2. Dispositif conforme à la revendication 1, caractérisé en ce que la couche non poreuse (56) comprend deux ouvertures (19, 20) pour recevoir la solution liquide, chacune de ces ouvertures étant en regard de l'une des électrodes (30, 32).

3. Dispositif conforme à la revendication 2, caractérisé en ce que la couche poreuse (54) comprend des ouvertures en repérage de celles ménagées dans la couche non poreuse (56).

4. Dispositif conforme à l'une quelconque des revendications 2 ou 3, caractérisé en ce que la couche non poreuse (56) est hydrophobe.

5. Dispositif conforme à la revendication 3 ou 4, comprenant une seconde couche non poreuse (52) appliquée sur la face de la couche poreuse (54) en regard des électrodes, cette seconde couche non poreuse comprenant des ouvertures en repérage de celles de la couche poreuse, caractérisé en ce que la couche poreuse est formée d'une substance fibreuse, et en ce que la seconde couche non poreuse a une épaisseur suffisante pour empêcher les fibres de la couche poreuse de former un pont liquide entre la couche poreuse et l'électrode (30 ou 32).

6

6. Dispositif conforme à la revendication 5, caractérisé en ce que la première couche non poreuse (56) est plus mince que la deuxième couche non poreuse (52), et est formée d'une matière plus dense pour éviter l'incurvation.

7. Dispositif conforme à l'une quelconque des revendications 4, 5 ou 6, caractérisé en ce que la première couche non poreuse (56) est formée de polyéthylène de haute densité.

FIG. 1

FIG. 2